# EUROPEAN PATENT APPLICATION

(11) **EP 1 568 528 A2**
(43) Date of publication of application: **31.08.2005**
(21) Application number: 02755019.3
(22) Date of filing: 06.08.2002
(51) Int. Cl.: B60J 3/02

(54) **SUN VISOR**

(30) Priority: 07.06.2002 ES 200201313
(71) Applicant: GRUPO ANTOLIN-INGENIERIA, S.A., 09007 Burgos (ES)
(72) Inventor: GOMEZ MIMBIELA, Javier, E-09007 Burgos (ES); ESCRIBANO ANDRES, Pablo, E-09007 Burgos (ES); LE CLAIRE, Bertrand, E-09001 Burgos (ES); GARCIA GONZALEZ, Esther, E-09006-Burgos (ES)
(74) Representative: Esteban Perez-Serrano, Maria Isabel
(86) International application number: PCT/ES2002/000394
(87) International publication number: WO 2003/104002

(57) **Abstract**

A sun visor for motor vehicles consisting of a structural frame (5) formed by a recyclable plastic material injected into a mould, and a second material, also recyclable, which is compatible with the material used in the frame and which incorporates certain components of the final sun visor unit.

## Description

This invention concerns sun visors and other similar units used in the automotive industry, where recent regulations reveal an increasing tendency towards convenience of and the need to supply recyclable units.

At the moment, automotive sun visors are normally manufactured in two different ways:
1. A structure, normally made of metal, with a rigid foam body made of a plastic, thermoplastic or thermostable material, which is then coated either with layers of a plastic material such as PVC or a textile material such as a fabric or felt.
2. Sockets made of a plastic material, which are then coated with a layer of PVC, fabric or TPO.

Foam sun visors are manufactured according to the following modus operandi:
- Creation of the frame.
- Moulding of the foam surrounding the frame.
- Coating the unit with the layers of lining.
- Sealing the unit by heat sealing or gluing the layers of lining or by using another similar method.
- Assembly of the different components such as the mirror, shaft, supports, etc.

Because this type of foam-based sun visors incorporate a metal part and, in most cases, a coating made of other materials such as PVC, they cannot be easily recycled. This situation is complicated further by the fact that the body of the sun visor consists of foam made from a thermostable material.

With regard to the two sockets made of thermoplastic material, the first two operations referred to are reduced to a single operation; the injection of both sockets. These sockets support and form the structure of the sun visor.

Instead of a rigid foam coating this invention opts for a simple closure of the sockets, which is both quicker and easier to carry out. The remaining operations are repeated as in the case of the metal structure and foam.

The ability to recycle these sun visors with sockets made from a thermoplastic material is hampered by the use of materials such as PVC for the coatings. PVC continues to be the most widely used material in the majority of sun visors manufactured.

As indicated earlier, the most commonly used techniques in the manufacturing of sun visors are based on the creation of a core unit or frame, which is then coated with layers of another material.

Visors made according to these techniques all have the inconvenience of being difficult to recycle. It is also difficult to adapt their shape to the vehicle roof if the roof has pronounced ridges or curves. The greatest inconvenience, however, is when they have to be lined or coated. Furthermore, these conventional sun visors typically have different components incorporated into them, a process that must be carried out after the body of the visor has been manufactured, thus involving extra costs as a result of special procedures necessary to complete the unit.

It is an object of this invention to provide a sun visor that can be recycled without the need to separate the components beforehand.

Another object of this invention is to create a sun visor, into which certain components can be incorporated during the manufacturing stage, thus reducing subsequent assembly operations or eliminating them altogether.

Another object of this invention is to provide a sun visor that is both easy and cheap to manufacture.

A further object of this invention is to provide a sun visor that can be adapted to any vehicle roof, no matter the shape or form of the roof.

In order to attain these objectives the invention claims the creation of a sun visor that differs from other sun visors made up to now in that the frame or core unit, made beforehand in another material, is not coated with layers.

The sun visor, according to the invention, is made by injecting a recyclable thermoplastic material beforehand to form sockets, onto which is placed another injected thermoplastic material, which can also be recycled and which is compatible with the material used to form the sockets.

A notable feature of these two steps is the added innovation of the possibility of integrating other features typically associated with a sun visor of this type such as, for example, a mirror, a shaft to connect it to the roof, etc.

As part of this process all the materials that form the structure and outer surface of the sun visor are integrated in the injection phase.

A preferred method of manufacturing a sun visor according to the invention is to begin by using a machine used to inject thermoplastic material with the necessary elements to position, open and close a mould with the shape of the part to be made, as well as possessing the injection units needed to inject a number of thermoplastic materials.

For its part, the mould has been designed to inject more than one component, following known methods that allow this to be done such as, for example, rotation moulding, transfer moulding, etc.

At the beginning of the cycle the mould is open, and into it are placed the different features to be incorporated into the part during the phase when the plastic sockets are manufactured such as, for example, the mirror, shaft, etc.

Once the mould has been closed the first component is injected into the mould and the same machine is used to inject the other component, following the method selected.

Once the second component has been injected, the part is left to cool before the mould is opened and the part formed is taken out.

The two sockets obtained are joined together using any known process used to connect thermoplastic parts: clips, heat sealing, gluing, etc. As a result, the sockets are formed without the need to undertake any further operations.

A sun visor manufactured in such a way can be easily adapted to and used in a wide range of vehicles, thus providing a number of noteworthy advantages.

One advantage, for example, lies in the possibility of carrying out the entire process in a single manufacturing position, as all the components can be integrated in the first injection stage.

The thermoplastic materials used can be joined together properly, provided that they are compatible, as the parameters necessary for this to occur are reached during the injection cycle.

The integration of certain features in the formation of the sun visor sockets beforehand avoids time being wasted in assembling them at a later stage.

Furthermore, as the two components are joined together, the parasol can be given any shape or form and can thus be attached to any kind of vehicle roof.

These and other aspects of the solution proposed by the invention can be seen in greater detail on the diagram sheet attached, full details of which are given below:
Figure 1 provides a front-on view of a typical sun visor.
Figure 2 shows the cross section along the I-I line in Figure 1 in a conventional non-flat sun visor.
Figure 3 shows the cross section along the I-I line in Figure 1 in a flat sun visor.
Figure 4, according to this invention, shows the cross section along the I-I line in Figure 1 in a curved sun visor.

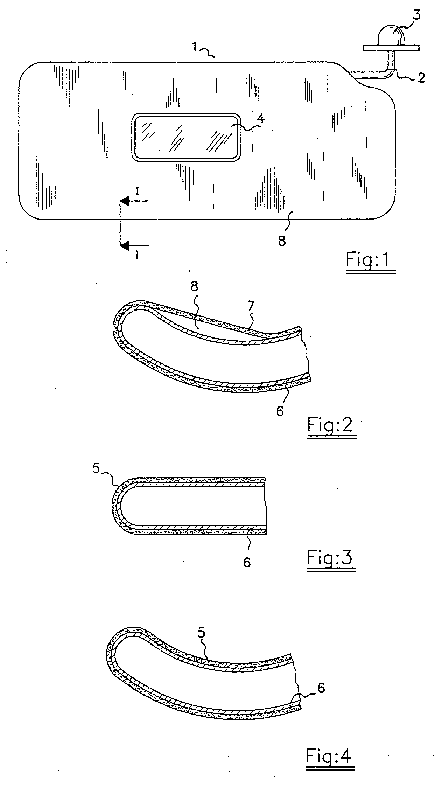

According to Figure 1 this parasol (1) has a body in which a mirror (4) can be seen along with an arm (2) to rotate and move the sun visor in relation to a base (3) attached to the roof of the vehicle.

When this sun visor is manufactured according to traditional techniques, the interior frame can be manufactured according to any of the aforementioned solutions.

Aside from the aforementioned difficulty of recycling said solutions, the problem created by the lack of adaptability of a sun visor manufactured in such a way to the different curves of roofs in certain makes of vehicle is illustrated in Figure 2. Here, the interior frame (6) is covered by an exterior lining (7) that proves to be less than satisfactory, as its surface does not adapt to the shape of the frame, thus creating undesired gaps (8).

This fault becomes all too evident when a traditional means of applying the covering is employed. In theory, and using resources available today, this lack of adaptability can be addressed by undertaking additional operations such as the use of clips, heat sealing, etc. However, these additional operations prove to be more complex and costly.

However, according to the claims presented by this invention, the sun visor illustrated in the cross sections in Figures 3 and 4, provides a complete solution to the problem created by this lack of adaptability, as the materials that make up the visor are joined together all the way along the surface.

One basic solution is that proposed in Figures 3 and 4 wherein a frame (5) is formed by injecting a recyclable thermoplastic material, which incorporates a second injection over it (6), again of a recyclable thermoplastic material.

Another part of these operations that should also be highlighted is the incorporation of various components that make up the sun visor such as, for example, the mirror (4), the shaft that houses the arm (2), etc.

As a result, a parasol designed and manufactured in line with this invention can easily be adapted to a wide range of vehicles, is cheap and easy to manufacture and assemble and is also easy to recycle.

The general concept of the invention also enables the possibility of creating a single-piece sun visor in the form of a flat board instead of the aforementioned dual-socket sun visor, a feature which has duly been pointed out here.

## Claims

1. A sun visor for motor vehicles consisting of a main body onto which can be incorporated the visor's components such as the mirrors, shafts, electrical circuitry, etc., and which is **characterised by** the fact that it has a frame (5) that acts as a supporting structure and as the body of the sun visor at the same time. The frame is made of a recyclable thermoplastic material injected into a pre-assembled mould, and a second material (6), also a recyclable thermoplastic material, injected into the same mould as the frame to form a final coating. This second material is compatible with the material used to form the frame and certain components that make up the final sun visor unit are incorporated into the mould during the injection process.

2. A sun visor according to claim 1 wherein all the materials used to form the structure and the exterior of the sun visor are incorporated during the injection process.

3. A sun visor according to claim 1 wherein the central body consists of two casings made of a thermoplastic material together with the corresponding coating and which are then joined together to form a single body.

4. A sun visor according to claim 1 wherein the central body consists of a single layer of thermoplastic material together with the corresponding coating.

5. A sun visor according to claim 1 wherein the inner cavity of the sun visor is formed, either in part or completely, by introducing a fluid, liquid or gas into it, either by pressure injecting the fluid directly into the mould cavity or as a result of additives incorporated into the materials used in the injection process.
